# EUROPEAN PATENT SPECIFICATION

(11) **EP 3 001 777 B1**
(45) Date of publication and mention of the grant of the patent: **24.05.2023**
(21) Application number: 15002786.0
(22) Date of filing: 29.09.2015
(51) Int. Cl.: H05B 45/12, H05B 47/11, H05B 47/115, H05B 47/175

(54) **LUMINOUS INTENSITY REGULATING DEVICE FOR LED LIGHT TOWERS**
LICHTSTÄRKEREGELUNGSVORRICHTUNG FÜR LED-LEUCHTTÜRME
DISPOSITIF DE RÉGULATION DE L'INTENSITÉ LUMINEUSE POUR DES TOURS DE LUMIÈRE À DEL

(30) Priority: 29.09.2014 ES 201431253
(43) Date of publication of application: 30.03.2016
(73) Proprietor: Grupos Electrogenos Europa, S.A., 50450 Muel (Zaragoza) (ES)
(72) Inventor: Tolón Martin, Tamara, 50450 Muel (Zaragoza) (ES); Santa Bárbara, José Maria, 50450 Muel (Zaragoza) (ES)
(74) Representative: Schäfer, Matthias W.

(56) References cited:
- WO-A1-2014/106174
- WO-A1-2014/147510
- US-A1- 2010 296 285

## Description

This description relates, as its title indicates, to a system for automatically or manually regulating luminous intensity or lighting level, especially applicable in transportable light towers with LED ("Light-Emitting Diode") floodlights.

This device determines the luminous intensity level required in the work zone by detecting the environmental conditions and ambient light level in the said zone and it supplements the ambient lighting level with the light input provided by the LED tower until a baseline lighting level is reached. This baseline lighting level is defined in the device itself by using a selector.

This device can be integrated into a network, in such a way that several of these devices placed in several towers and being able to intercommunicate, regulate the luminous intensity of a network of LED light towers; proportionally increasing the illuminated area and increasing the regulating features of the individual tower.

### Field of the invention

The invention relates to the field of automatic or manual lighting level regulating devices for transportable light towers with LED floodlights set out individually or creating one or several networks.

### Background of the invention

At present the quest to achieve energy savings and efficiency is a necessity because of the increased social awareness regarding this issue and increased energy costs. Energy must only be used when it is absolutely necessary.

Until now this problem has not had a place in transportable lighting systems since it has not been possible to control lighting levels due to the lamp technology employed (normally metal halide), where installing a regulating device is not cost-effective; neither is there a particular awareness of this in the environment in which they are used.

The ideas of manufacturers consist of selectively switching floodlights on or off, or switching on the light tower according to the light level, using a light-sensitive switch or by means of timing. This type of regulating device and others better suited to LED technology are described in the following patents, amongst others: US 2009/0039797 A1 *"A process and system of lighting with green energy source and intelligent power management, which saves energy consuming and limits pollution.",* US 5455487 "*A device for controlling power to an electrical load."* US 2006/0220895 *"A visual indicator includes a solar panel, a rechargeable battery operatively connected to the solar panel for charging the rechargeable battery with power from the solar panel, a light emitting diode (LED) operatively connected to the rechargeable battery to emit light, and a controller operatively connected to the rechargeable battery and the LED to control operating characteristics of the LED",* US 2010/0269383 *"An apparatus and method provides for managing solar power to a LED illumination device such* as a *street sign so that the power from a power storage device is monitored and variations in applied power to the LED device can be dynamically made to preserve power or increase power as appropriate."* Or ES-2197812 *"Perfected lighting and*/*or signage device",* although this equipment relates to the regulation of devices that are not portable light towers.

Furthermore, light towers that incorporate LED as the lighting source are known, such as those described in patents AU2013100095 *"Lighting tower",* AU2011100774 *"A portable lighting tower",* AU2012205277 *"Improved Lighting System for Mobile Lighting Tower",* CN202532314 *"High-tower light emitting diode (LED) lighting device",* CN203115594 *"Stacked tower-type light-emitting diode (LED) lamp structure"* and CN202868613 *"Lighting tower car,* although they present the drawback of not having automatic elements that regulate the level of lighting generated by the floodlights.

Devices such as that described in patent ES-2289967 *"Floodlight system with remote control"* are also known but it presents the drawback of not being geared towards portable light towers but rather towards fixed lighting in workplaces, offices, etc.

Likewise, in the state of the art, technical installations such as that described in patent ES-2360774 *"Lighting system for lanes for vehicle traffic or movement of people"* are also known, but they are geared towards fixed installations that are intended to regulate lighting according to the people that pass or vehicle traffic to adjust the level of lighting to optimize traffic.

W0 2014/106 174 A1 refers to a method and apparatus for monitoring LED beacon lights. Inter alia a method described in this disclosure includes determining an amount of ambient light, selecting an operating mode for each one of the plurality of LED beacon lights based upon the amount of ambient light, determining a value of a threshold for the operating mode that is selected, receiving a light output value of each one of the plurality of LED beacon lights, comparing the light output value of each one of the plurality of LED beacon lights to the predetermined value of the dynamic threshold and generating an alarm when the light output value of any one of the plurality of LED beacon lights falls beiow the predetermined value dynamic threshold.

US 201010 296 285 A1 refers to a fixture with rotatable light modules. This disclosure describes fixtures with one or more of rotatable LED light bars, integrated sensors, onboard intelligence to receive signals from the LED light bars and control the LED light bars and a mesh network connectivity to other fixtures.

Document WO 2014/147510 A1 discloses an apparatus for information management and control of outdoor lighting networks. The underlying problem is to provide a platform for control and asset management of outdoor lighting networks as well as condition assessment, design/planning, regulation compliance and system optimization from early idea conception and planning stages to building custom solutions and operating/managing the infrastructure while demonstrating the benefits of the available products and technologies. According to this document, each lighting unit includes at least one sensor type and each of the light units communicates with at least one other light unit. Further, a central management system is in network communication with light units and sends control commands to the outdoor light units and receives the sensor information of the light units. One embodiment is dealing with the so-called black hole effect in front of a tunnel entrance. Further, several lighting modes are disclosed which are defined by traffic flow and light level.

### Description of the invention

To solve the current problem of energy consumption in lighting by LED light towers and in order to improve lighting comfort in the work zone to be illuminated, improving the current state of the art, the luminous intensity regulating system configured to control a transportable LED light tower having the features of claim 1 has been devised. Further, a luminous intensity regulating procedure having the features of claim 6 and a transportable LED light tower having the features of claim 7 are claimed. Advantageous embodiments are described in the dependent claims.

The automatic or manual lighting level regulating system for a LED tower can be integrated into a network of devices, so that several of these devices set in various towers can intercommunicate in an orderly and hierarchical way to provide redundancy to the network in the event of the failure of one of the towers or to adjust the power levels of each of them, in accordance with a common lighting level.

Said communication may be performed in a wired or wireless way. Any of the known digital or analogue transmission protocols applicable will be used for wired communication. For wireless communication Wifi Bluetooth or any other known radiofrequency communication protocol will be used.

The electronic control module comprises
- a direct current supply module connected to the power supply of the LED floodlight light tower or connected to a separate external network adapter,
- a regulating signal or signals generator module.

The electronic control module has two operating modes, manual or automatic, via an adjustment selector, so that when in manual mode position, the control signal at the output or outputs is proportional to the magnitude of the baseline manual setting.

When the adjustment selector is in the automatic position, the control signal present at the output or outputs is dynamically variable depending on the ambient light captured by the ambient sensor module or modules and the desired lighting level, indicated in the baseline light level indicator module.

The ambient sensor module is a monitoring element and it comprises at least
- a direct current or battery supply device,
- a signal processing module,
- one or several light level indicator modules
- a (GPS) positioning module,
- one or several presence detectors, of infrared, sonar, computer vision or other type,
- a communication device with digital output, with wired or wireless two-way communication capacity to communicate with the electronic control module.

The light level indicator module comprises
- one or several ambient light level sensors,
- a signal processing module to average the values measured, and
- an analogue or digital output signal.

The signal processing module carries out mathematical calculations on the values measured by the ambient light level sensors and an averaged, uniform value of ambient light level is obtained, eliminating any possible errors in measurements due to contamination or operating anomalies.

The light level indicator module can be built into an ambient sensor module or can be implemented as a separate module.

The baseline light level selector limits the maximum value of the regulating signal or signals present at the output or outputs according to the light requirements selected by the user, depending on the activity carried out in the work area of the light tower or network of light towers.

The expansion connector or connectors act as a means of extending the features of the electronic control module, chiefly to interconnect with other external devices such as communication modules, GPS modules, auxiliary remote or wireless sensors, that add to the basic characteristics and functionality of the said electronic control module.

The surveillance mode selector incorporates three features, two of which, the shadow minimizing feature and the monitoring feature act by default when the adjustment selector is positioned in automatic mode and do not form part of the invention. In addition, the surveillance mode feature is activated when the surveillance mode selector is positioned in surveillance mode.

The adjustment selector, in automatic mode position, activates the shadow minimizing feature and monitoring feature which do not form part of the invention, integrated in the surveillance mode selector. The shadow minimizing feature which does not form part of the invention reduces the shadow projected by objects over an ambient sensor module, by combining floodlights; in the monitoring mode, with the ambient sensor module installed on a static or moving vehicle or person, the said sensor is monitored within the work area covered by the tower or network of towers.
- The shadow minimizing feature which does not form part of the invention evaluates different strategies to equalize the level of light received by an ambient sensor module in all directions. The way to achieve this effect is by controlling the LED floodlights that have an area of action inside the position where the ambient sensor module is located, adjusting the power of these to the distance at which the said sensor is located in order to achieve a uniform level of light at as many angles as possible. This feature prevents shadows from forming inside the work area and prevents shadows generated by objects inside them.
- Another feature is the monitoring of a static or moving reference which does not form part of the invention. In this mode, different control strategies to obtain the required light level are evaluated in a sensor module. The way to obtain this effect is by controlling the LED floodlights that have an area of action inside the position where the ambient sensor module is located, adjusting the power of these to the distance at which the said sensor is located in order to obtain an adequate level of light over it. Given the characteristics and the separate control of the LED floodlights that allows the control signal, the required level of light on the ambient sensor module can be achieved even if it is moving within the work area of the network of light towers. The lighting level can also be regulated manually by using a device that varies electrical parameters (voltage, current or impedance) so that a variation in the physical position of this device is converted into a variation in the level of light output generated by the LED floodlights.
- The surveillance feature of the monitoring mode selector permits the light tower or network of light towers to operate in surveillance mode which means that when the tower or towers are switched off, the control module allows automatic start-up, mast elevation and activation of the floodlights at a pre-defined security lighting level when a presence signal is received in one or several of the ambient sensor modules.

The ambient sensor module is installed
- on the light tower, set out individually, in a network or in groups of networks,
- at any point of the area covered by the light beam of the light tower or network of light towers, positioned on the base surface or at a height,
- attached to machinery that is working in the illuminated area or to the clothes of personnel located in the illuminated work area.

The work area to be illuminated is considered to be that covered by the light beam of the light tower or of the network of light towers when they are operating under nominal luminous intensity conditions.

The network operation mode selector is activated when there are several LED light towers within the range defined by the connecting wires between towers or by the power and reliability of the wireless link and they are required to operate together over a work area. The first tower having the selector in network mode will act as the master and the following towers that have the selector activated will act as slaves in the communications network.

The signal generated by the electronic control module can be sent to the power supplies, either directly by wire or wirelessly to a module in the area in which the power supplies are located. Once the signal has been processed and decoded, this module will generate the appropriate information to adjust the work level to the power supplies.

Operation of the electronic control module includes a first stage consisting of monitoring the boundary conditions, manually or automatically, a second stage of processing the baseline information and generating the regulating signal and a third stage of control of the power supply to the LED projectors to obtain the appropriate lighting level.

The luminous intensity regulating procedure of the system configured to control a transportable LED light tower is carried out in a light tower working in individual, network or network groups operating mode, in the following phases
- a stage of monitoring the boundary conditions and the manual or automatic mode
- a stage of processing the baseline information
- a stage of generating the signal or signals to achieve the appropriate lighting level.
in one of the following operating modes
- Individual operating mode
- Network operating mode
- Network groups operating mode

At the monitoring stage, with the light towers operating individually, in a network or in a network group
- the boundary conditions are monitored based on the ambient sensor module or modules and the light level indicator modules,
- each ambient sensor module, via a signal processing module, processes the signals received by the light level sensor, GPS positioning module and the presence detector sensor and acts on the communication device so that the data transfer rate and amount of data transferred adjusts to the signals received.

At the processing stage, with the light towers operating individually, in a network or in a network group
- the information received from the monitoring stage and from the position of the baseline light level selectors, adjustment selector, surveillance mode selector and network operating mode selector is processed to determine the lighting level to be provided by each LED floodlight
- The baseline light level selector limits the maximum value of the regulating signal or signals present at the output or outputs according to the light requirements selected by the user, depending on the activity carried out in the area covered by the light beam of the light tower or of the network or networks of light towers.
- when the adjustment selector is in manual mode position, the regulating signal or signals present at the outputs are determined by the position of the baseline light level sector regardless of the ambient conditions.
- when the adjustment selector is in automatic mode, the regulating signal or signals present at the outputs are dynamically variable depending on the signals sent by the ambient sensor module or modules, the signals sent by the light level indicator modules and the position of the baseline light level selectors.
- when the adjustment selector is selected in automatic mode and the appropriate mode is selected in the surveillance mode selector, in surveillance mode, when the light tower or towers are switched off, the electronic control module permits start-up, mast elevation and activation of the LED floodlight at a pre-defined security lighting level when a presence signal is received in one or several of the ambient sensor modules.

At the processing stage, with the light towers operating in a network or in groups of networks
- when the network operating mode selector is selected, the eiectronic control module communicates with other electronic control modules in its wired or wireless coverage area and converts them into dependent modules, acquiring the control of their processing capacity and the readings of the sensors associated with the dependent light towers.

At the signal generating stage, with the light towers operating individually, in a network or network group
- the generation of the regulating signal or signals acts on the power supplies of the LED floodlights to achieve the appropriate lighting level.
- the regulating signal or signals present at the output or outputs are dynamically variable depending on the lighting level required, according to the ambient conditions determined by the ambient sensor modules and/or the light level indicator modules.
- the regulating signal or signals for the power supplies of the LED floodlights obtained from the regulating signal generator module can be specific for each power supply.
- the regulating signal or signals present at the output or outputs are transmitted by wired connection or wirelessly to each of the power supplies of the LED floodlight, by analogue, PWM digital or digital communication by means of standard or proprietary protocols for lighting or other types of systems,

A technical expert will easily comprehend that the characteristics of different embodiments can be combined with the characteristics of other possible embodiments provided that the combination is technically possible

### Advantages of the invention

The luminous intensity regulating system configured to control a transportable LED light tower that is presented affords multiple advantages over currently available equipment, the most important of these being that it allows a notable reduction in energy consumption, increases autonomy and improves lighting comfort for users, adapting to real needs at all times.

Another important advantage is that the lighting level is adapted automatically, without the need to act on the tower, thus avoiding any incorrect handling of it.

Another advantage of the present invention is that its use can be activated or monitored remotely thanks to the different control systems which can be implemented for the remote control and management of the system.

Furthermore, another added advantage is that of being able to integrate the tower into a network of towers that can act together to illuminate an area in an optimal way or to provide redundancy for the group if one of the towers fails.

Another advantage that is inherent to the use of LED technology is the longer duration and service life of the device, regardless of the number of on/off cycles.

### Description of the figures

To provide a better understanding of the object of this invention, a preferred practical embodiment of a luminous intensity regulating system configured to control a transportable LED light tower is shown in the drawing attached.
Figure 1 shows a schematic view of the luminous intensity regulating device for LED light towers
Figure 2 shows a schematic view of an ambient sensor module
Figure 3 shows a schematic view of a lighting level indicator module
Figure 4 shows a schematic view of the invention in manual operation.
Figure 5 shows a schematic view of the invention in automatic operation.
Figure 6 shows a schematic view of a light tower operating in individual mode.
Figure 7 shows a schematic view of several light towers operating in a network.
Figure 8 shows a schematic view of several light towers operating in network groups.
Figure 9 shows a flowchart of the invention

### Preferred embodiment of the invention

The conformation and characteristics of the invention can be better understood in the following description that relates to the attached figures.

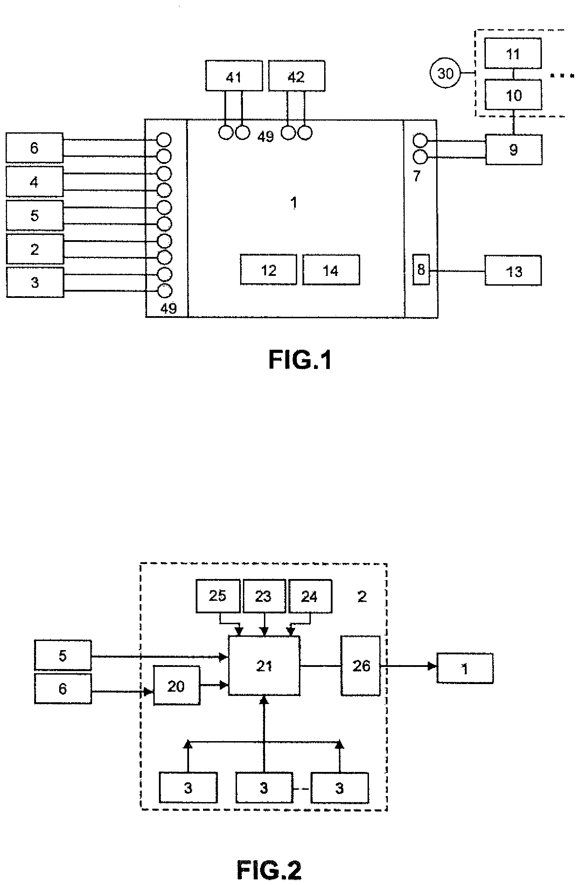

Figure 1 schematically shows the luminous intensity regulating system configured to control a transportable LED light tower, indicating an electronic control module (1), with one or several outputs (7) with one or several regulating signals (9) for the power supplies (10) of the LED floodlights (11) of the light tower (30).

There are also one or several expansion connectors (8) to connect the electronic control module (1) to one or several external communication modules (13), such as for example, communication modules, GPS modules, auxiliary remote or wireless sensors that add to the basic characteristics and functionality of the said electronic control module (1) Connections (49) are shown for
∘ an adjustment selector (4), in manual or automatic mode
∘ one or several ambient sensor modules (2)
∘ a surveillance mode selector (41),
∘ a network operating mode selector (42)
∘ one or several light level indicator modules (3)
∘ a baseline light level selector (5),

As shown in figure 1 the electronic control module (1) comprises a direct current supply module (12) connected to the power supplies (10) of the LED floodlight (11) light tower (30) itself or connected to an external network adapter (6) and a regulating signal or signals generator module (14)

It is envisaged that all of the connections (49), both between the output or outputs (7) of the electronic control module (1) and the power supplies (10) of the LED floodlights (11), and those of the ambient sensor module or modules (2) and the baseline light level indicator module (3) with the electronic control module (1) may be wired or carried out with wireless connections using any of the known wireless protocols or procedures or a combination of both.

Figure 2 schematically shows an ambient sensor module (2), indicating a direct current or battery supply device (20), a signal processing module (21), one or several light indicator modules (3), a (GPS) positioning module (23), one or several presence detector sensors (24), of infrared, sonar, computer vision or other type and a communication device (25) with digital output (26) with wired or wireless two-way communication capacity to communicate with the electronic control module (1).

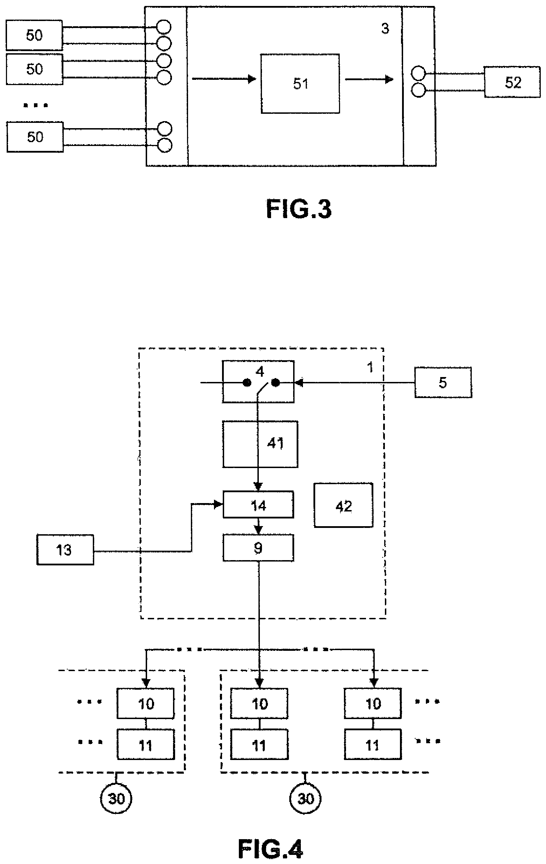

Figure 3 schematically shows the light level indicator module (3), showing one or several ambient light level sensors (50), a signal processing module (51) for averaging the values measured and an analogue or digital output signal (52).

The Iluminous intensity regulating system configured to control a transportable LED light tower has two operating modes, manual or automatic; figure 4 schematically shows operation in manual mode, indicating the electronic control module (1), with the adjustment selector (4) in manual mode, indicating the control signal (9) which is proportional to the magnitude of the baseline light level selector (5).

In this manual mode the control signal or signals (9) for the power supplies (10) of the LED floodlights (11), obtained via the regulating signal generator module (14) according to the inputs from the external sensors (13) and internal processes of timing, presence detection or other types, reach each of the LED floodlights (11), of each light tower (30) with the same luminous intensity.

It also shows the surveillance mode selector (41) and network operating mode selector (42) disconnected.

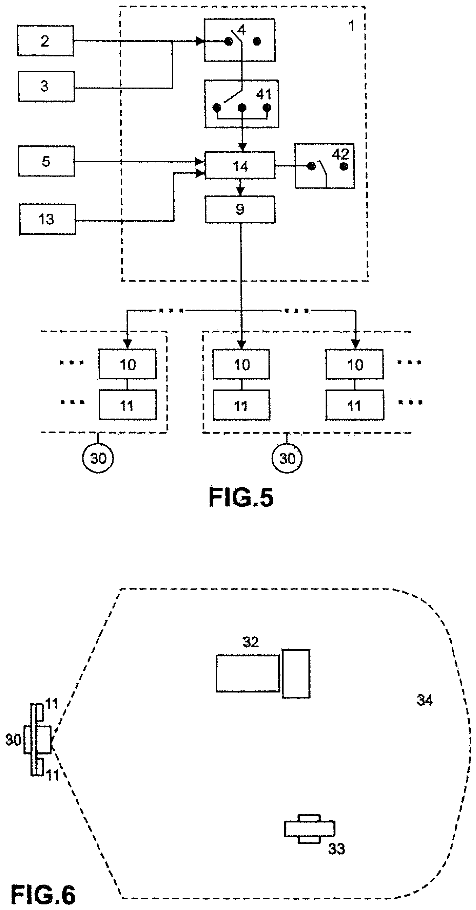

Figure 5 schematically shows an operation in automatic mode, indicating the electronic control module (1), with the adjustment selector (4) in automatic mode, where the control signal (9) is dynamically variable depending on the ambient light captured by the ambient sensor module or modules (2), and the lighting level required, indicated on the baseline light level indicator module (3), the surveillance mode selector (41) and network operating mode selector (42) being shown to be activated in terms of their function.

In this automatic mode, the control signal or signals (9) for the power supplies (10) of the LED floodlights (11), obtained via the regulating signal generator module (14) depending on the inputs from the external sensors, is dynamically variable, reaching each of the LED floodlights (11) of each light tower (30) with the luminous intensity indicated by the baseline light level indicator module (3).

Figure 6 shows a light tower (30) with LED floodlights (11) in individual operating mode, the ambient sensor module or modules (2) being positioned at any point of the area covered by the light beam (34) or the light tower (30), positioned on the base surface or at a height, attached to the machinery that is working in the illuminated area (32) or to the clothes of personnel located in the illuminated work area (33).

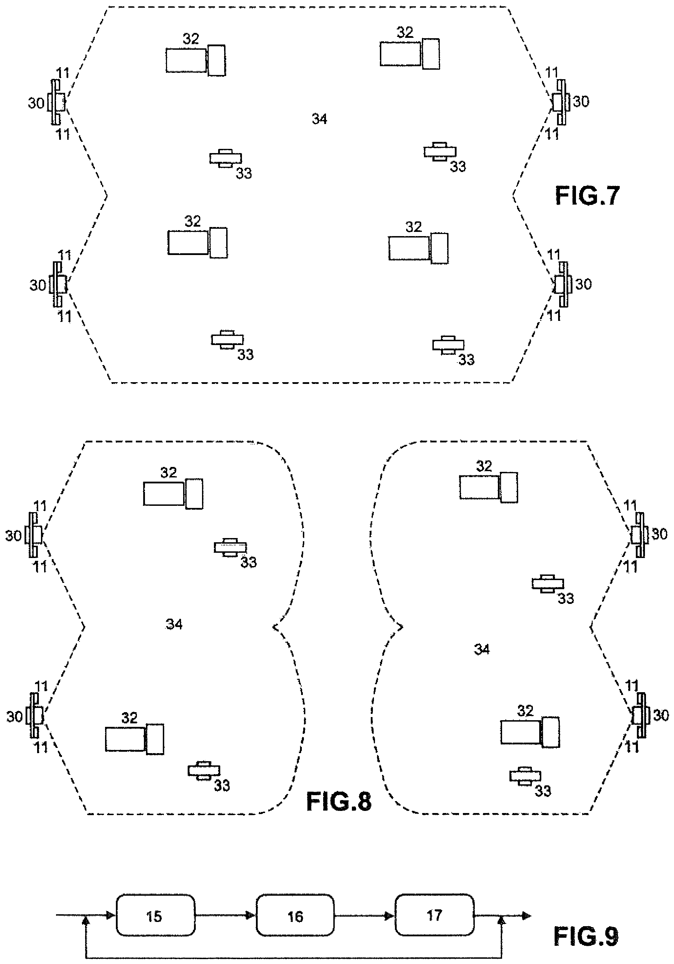

Figure 7 shows several light towers (30) with LED floodlights (11) in network operating mode, with light beam (34) coverage of a wide area.

Figure 8 shows different groups of light towers (30) with LED floodlights (11) in network group operating mode, with light beam (34) coverage of different areas.

Figure 9 schematically shows the different stages to carry out the luminous intensity regulation procedure of the device for LED light towers, with the light towers in individual, network or network groups operating mode and in manual or automatic mode, in the following phases:
- a monitoring stage (15) of the boundary conditions, in manual or automatic mode,
- a processing stage (16) of the baseline information and generation of the regulating signal (9)
- a generating stage of the control signal or signals (17) of the supply to the LED floodlights to reach the appropriate lighting level and
in one of the following operating modes
- individual operating mode
- Network operating mode
- Network groups operating mode

## Claims

1. - Luminous intensity regulating system configured to control a transportable LED light tower comprising a mast, the system comprising
• an electronic control module (1),
• with one or several outputs (7) with one or several control signals (9) for a power supply (10) for each of LED floodlights (11) of the LED light tower (30), and
• with one or several expansion connectors (8),
• the following modules that are connected to the control module (1):
∘ one or several ambient sensor modules (2) having a direct current or battery supply device (20), a signal processing module (21), one or several light level indicator modules (3), a (GPS) positioning module (23), one or several presence detector sensors (24), of infrared, sonar, computer vision or other type, and a communication device (25) with digital output (26), with wired or wireless two-way communication capacity to communicate with the electronic control module (1),
∘ one or several light level indicator modules (3), comprising one or several ambient light level sensors (50), a signal processing module (51) to average the values measured, and an analogue or digital output signal (52), wherein the one or several light level indicator modules (3) are built into an ambient sensor module (2) or implemented as a separate module,
∘ a baseline light level selector (5), for limiting the maximum value of the one or several control signals (9) present at the one or several outputs (7) according to the light requirements selected by the user,
∘ an adjustment selector (4) adjustable to a manual or automatic mode, wherein when in manual mode position, the control signal (9) at the output or outputs (7) is proportional to the magnitude of the baseline manual setting of the baseline light level selector (5), and wherein when in the automatic mode position, the control signal (9) present at the output or outputs (7) is dynamically variable depending on the ambient light captured by the ambient sensor module or modules (2) and the desired lighting level, indicated in the baseline light level indicator module (3),
∘ a surveillance mode selector (41) for selecting - when in automatic mode - a surveillance mode,
- wherein in the surveillance mode the control module (1) is configured to automatically start-up, elevate the mast and activate the LED floodlights at a pre-defined security lighting level when a presence signal is received in one or several of the ambient sensor modules (2) when the tower is switched off,
∘ a network operation mode selector (42) configured to be activated when there are several LED light towers within the range defined by the connecting wires between LED light towers or by power and reliability of a wireless link required to operate together over a work zone (33) to be illuminated.

2. - Luminous intensity regulating system for a transportable LED light tower, according to claim 1, **wherein** the electronic control module (1) comprises
• a direct current supply module (12) connectable to the power supply (10) of the LED light tower (30) itself or connectable to a separate external network adapter (6), and
• a control signal or signals generator module (14).

3. - Luminous intensity regulating system for a transportable LED light tower, according to anyone of the previous claims, **wherein** when the network operation mode selector (42) of a first tower is in network mode it is configured to be a master regulating system and the regulating systems of following towers that have the network operation mode selector (42) activated are slaves in the communications network.

4. - Luminous intensity regulating system for a transportable LED light tower according to anyone of the previous claims, **wherein** the expansion connector (8) is configured to connect the electronic control module (1) to one or several external communication modules (13)

5. - Luminous intensity regulating system for transportable LED light tower, according to anyone of the previous claims, **wherein** the ambient sensor module (2) is configured to be installed
• on the LED light tower (30), set out individually, in a network or in groups of networks,
• at any point of an area covered by a light beam (34) of the LED light tower (30) or network of LED light towers (30); positioned on the base surface or at a height, and
• attached to machinery that is working in an illuminated area (32) or attached to clothes of personnel located in an illuminated work zone (33).

6. - Luminous intensity regulating procedure for the intensity regulating system according to any one of the previous claims, wherein the regulating system is positionable in the LED light tower (30), the procedure comprising the following phases
- a monitoring stage (15), wherein environmental conditions are monitored based on the ambient sensor module or modules (2) and the light level indicator modules (3), each ambient sensor module (2), processing via a signal processing module (21) signals received by the light level indicator module (3), GPS positioning module (23), and the presence detector sensor (24), and act on the communication device (25) in such a way that the speed and quantity of data transfer adjusts to the signals received,
- a processing stage (16), wherein information received from the monitoring stage (15) and from a setting of a baseline light level selector (5), adjustment selector (4), surveillance mode selector (41) and network operating mode selector (42), is processed to determine the luminous intensity to be provided by each LED floodlight (11),
- the baseline light level selector (5) limiting the maximum value of the control signal or signals (9) present at the output or outputs (7), according to light requirements selected by the user, depending on activity carried out in the area covered by a light beam (34) of an LED light tower (30) or of a network or networks of LED light towers (30), when the adjustment selector (4) is in manual mode position, the control signal or signals (9) present at the outputs (7) being determined by the setting of the baseline light level selector (5) regardless of the ambient conditions,
- the control signal or signals (9) present at the outputs (7) are dynamically variable according to the signals sent by the ambient sensor module or modules (2), the signals sent by the light level indicator modules (3), the setting of the baseline light level selectors (5), surveillance mode selector (41) and network operating mode selector (42), when the adjustment selector (4) is in automatic position,
- the electronic control module (1) permits start-up, mast elevation and activation of the LED floodlights (11) at a pre-defined security lighting level when a presence signal is received in one or several of the ambient sensor modules (2), when the LED light tower (30) is switched off, when the adjustment selector (4) is selected in automatic mode and the surveillance mode selector (41) is activated, and
- a signal or signals generating stage (17), wherein the generation of the control signal or signals (9) acts on the power supplies (10) of LED floodlights (11) to achieve the luminous intensity level required in the work zone, the control signal or signals (9) present at the output or outputs (7) are dynamically variable depending on the luminous intensity level required, according to the ambient conditions determined by the ambient sensor modules (2) and/or the light level indicator modules (3), the control signal or signals (9) for the power supplies (10) of the LED floodlights (11), obtained from the control signal generator module (14) are specific for each power supply (10), the control signal or signals (9), present at the output or outputs (7) are transmitted by wired connection or wirelessly to each of the power supplies (10) of the LED floodlight (11), by analogue communication, PWM digital communication or digital communication by means of standard or proprietary protocols for lighting or other types,
the phases being carried out in one of the following operating modes defined by the network operation mode selector (42)
- individual operating mode, or
- Network operating mode.

7. - Transportable LED light tower (30) having a power supply (10) and LED floodlights (11) comprising a luminous intensity regulating system according to anyone of claims 1 to 5.

## Patentansprüche

1. - Lichtstärkeregelungsvorrichtung, die ausgelegt ist, einen transportablen LED-Beleuchtungsturm zu steuern, aufweisend
• ein elektronisches Steuermodul (1),
• mit einem oder mehreren Ausgängen (7) mit einem oder mehreren Steuersignalen (9) für eine Stromversorgung (10) für jeweilige LED-Flutlichtstrahler (11) jedes Beleuchtungsturms (30) und
• mit einem oder mehreren Erweiterungsverbindungsgliedern (8),
• wobei die folgenden Module mit dem Steuermodul (1) verbunden sind:
∘ ein oder mehrere Umgebungssensormodule (2) mit einer Gleichstrom- oder Batterieversorgungsvorrichtung (20), ein Signalverarbeitungsmodul (21), ein oder mehrere Lichtpegelanzeigemodule (3), ein (GPS) Positionsmodul (23), ein oder mehrere Bewegungsmeldersensoren (24) der Art Infrarot, Sonar, Computersicht oder anderer Art und eine Kommunikationsvorrichtung (25) mit digitalem Ausgang (26) mit drahtgebundener oder drahtloser Zweiwegekommunikationsfähigkeit zur Kommunikation mit dem elektronischen Steuermodul (1),
∘ ein oder mehrere Lichtpegelanzeigemodule (3), aufweisend einen oder mehrere Umgebungslichtpegelsensoren (50), ein Signalverarbeitungsmodul (51) zum Mitteln der gemessenen Werte und ein analoges oder digitales Ausgangssignal (52), wobei das eine oder die mehreren Lichtpegelanzeigemodule (3) in ein Umgebungssensormodul (2) eingebaut oder als separates Modul implementiert sind,
∘ einen Basislichtpegelwahlschalter (5) zum Begrenzen des Maximalwerts des einen oder der mehreren an dem einen oder den mehreren Ausgängen (7) anliegenden Steuersignale (9) entsprechend den vom Benutzer ausgewählten Lichtanforderungen,
∘ einen Einstellungswahlschalter (4), der in einen manuellen oder automatischen Betrieb einstellbar ist, wobei, wenn er sich in der Position manueller Betrieb befindet, das Steuersignal (9) an dem Ausgang oder den Ausgängen (7) proportional zu der Größe der manuellen Basiseinstellung des Basislichtpegelwahlschalters (5) ist, und wobei, wenn er sich in der Position automatischer Betrieb befindet, das an dem Ausgang oder den Ausgängen (7) anliegende Steuersignal (9) in Abhängigkeit von dem von dem Umgebungssensormodul oder den -modulen (2) erfassten Umgebungslicht und dem in dem Basislichtpegelanzeigemodul (3) angezeigten gewünschten Beleuchtungspegel dynamisch variabel ist,
∘ einen Überwachungsbetrieb-Wahlschalter (41) zum Auswählen - wenn in automatischem Betrieb - eines Überwachungsbetriebs, wobei das Steuermodul (1) im Überwachungsbetrieb ausgelegt ist, automatisch zu starten, den Mast anzuheben und die Flutlichtstrahler auf einem vordefinierten Sicherheitsbeleuchtungspegel zu aktivieren, wenn ein Anwesenheitssignal in einem oder mehreren der Umgebungssensormodule (2) empfangen wird, wenn der Turm ausgeschaltet ist,
∘ einen Netzwerk-Betriebsartwahlschalter (42), der ausgelegt ist, aktiviert zu werden, wenn sich mehrere Beleuchtungstürme innerhalb des Bereichs befinden, der durch die Verbindungskabel zwischen den Türmen oder durch die Leistung und Zuverlässigkeit der drahtlosen Verbindung definiert ist, die erforderlich sind, um gemeinsam über eine auszuleuchtende Arbeitszone (33) zu agieren.

2. - Lichtstärkeregelungsvorrichtung für LED-Beleuchtungstürme nach Anspruch 1, wobei das elektronische Steuermodul (1) aufweist
• ein Gleichstromversorgungsmodul (12), das mit der Stromversorgung (10) eines LED-Flutlichtstrahlers (11) des Beleuchtungsturms (30) selbst oder mit einem separaten externen Netzwerkadapter (6) verbindbar ist, und
• ein Steuersignal- oder -signale-Erzeugungsmodul (14).

3. - Lichtstärkeregelungsvorrichtung für LED-Beleuchtungstürme nach einem der vorhergehenden Ansprüche, **wobei**, wenn der Netzwerk-Betriebsartwahlschalter (42) des ersten Turms sich im Netzwerkbetrieb befindet, sie ausgelegt ist, die Hauptregelungsvorrichtung zu sein, und die Regelungsvorrichtungen der folgenden Türme, die den Netzwerk-Betriebsartwahlschalter (42) aktiviert haben, die Nebensender in dem Kommunikationsnetzwerk sind.

4. - Lichtstärkeregelungsvorrichtung für LED-Beleuchtungstürme nach einem der vorhergehenden Ansprüche, **wobei** das Erweiterungsverbindungsglied (8) ausgelegt ist, das elektronische Steuermodul (1) mit einem oder mehreren externen Kommunikationsmodulen (13) zu verbinden.

5. - Lichtstärkeregelungsvorrichtung für LED-Beleuchtungstürme nach einem der vorhergehenden Ansprüche, **wobei** das Umgebungssensormodul (2) ausgelegt ist, installiert zu werden
• an einem Beleuchtungsturm (30), der einzeln in einem Netzwerk oder in Gruppen von Netzwerken aufgestellt ist,
• an einem beliebigen Punkt eines Gebiets, das von einem Lichtstrahl (34) des Beleuchtungsturms (30) oder des Netzwerks von Beleuchtungstürmen (30) überdeckt wird; positioniert auf der Grundfläche oder in einer Höhe, und
• befestigt an Maschinerie, die in einem ausgeleuchteten Gebiet (32) arbeitet, oder befestigt an der Kleidung von in einer beleuchteten Arbeitszone (33) befindlichem Personal.

6. - Lichtstärkeregelungsverfahren für die Lichtstärkeregelungsvorrichtung nach einem der vorhergehenden Ansprüche, wobei das Verfahren in der in dem Beleuchtungsturm (30) positionierbaren Regelungsvorrichtung stattfindet und die folgenden Phasen aufweist
- einen Beobachtungsschritt (15), wobei Umgebungsbedingungen auf der Grundlage des Umgebungssensormoduls oder der -module (2) und der Lichtpegelanzeigemodule (3) beobachtet werden und jedes Umgebungssensormodul (2), das über ein Signalverarbeitungsmodul (21) von dem Lichtpegelanzeigemodul (3), dem GPS-Positionsmodul (23) und dem Bewegungsmeldersensor (24) empfangene Signale verarbeitet, auf die Kommunikationsvorrichtung (25) derart einwirkt, dass sich die Geschwindigkeit und Menge der Datenübertragung an die empfangenen Signale anpasst,
- einen Verarbeitungsschritt (16), wobei Information, die von dem Beobachtungsschritt (15) und von einer Einstellung eines Basislichtpegelwahlschalters (5), Einstellungswahlschalters (4), Überwachungsbetrieb-Wahlschalters (41) und Netzwerk-Betriebsartwahlschalters (42) empfangen werden, verarbeitet wird, um die von jedem LED-Flutlichtstahler (11) bereitzustellende Lichtstärke zu ermitteln,
- wobei der Basislichtpegelwahlschalter (5) den Maximalwert des oder der an dem Ausgang oder den Ausgängen (7) anliegende(n) Steuersignals oder -signale (9) entsprechend der von dem Benutzer ausgewählten Beleuchtungsanforderungen begrenzt, abhängig von der Tätigkeit, die in dem von einem Lichtstrahl (34) eines Beleuchtungsturms (30) oder eines Netzwerks oder von Netzwerken von Beleuchtungstürmen (30) übergedeckten Gebiet vorgenommen wird, wenn sich der Einstellungswahlschalter (4) in der Position manueller Betrieb befindet, wobei das oder die an den Ausgängen (7) anliegende(n) Steuersignal oder - signale (9) durch die Einstellung des Basislichtpegelwahlschalters (5) unabhängig von den Umgebungsbedingungen ermittelt wird oder werden,
- das Steuersignal oder die -signale (9), das oder die an den Ausgängen (7) anliegt oder anliegen, entsprechend der Signale, die von dem Umgebungssensormodul oder den -modulen (2) gesendet werden, der Signale, die von den Lichtpegelanzeigemodulen (3) gesendet werden, und der Einstellung der Basislichtpegelwahlschalter (5), des Überwachungsbetrieb-Wahlschalters (41) und des Netzwerk-Betriebsartwahlschalters (42) dynamisch variabel ist oder sind, wenn sich der Einstellungswahlschalter (4) in der Position automatisch befindet,
- das elektronische Steuermodul (1) Start, Mastanhebung und Aktivierung des LED-Flutlichtstrahlers (11) bei einem vordefinierten Sicherheitsbeleuchtungspegel erlaubt, wenn ein Anwesenheitssignal in einem oder mehreren der Umgebungssensormodule (2) empfangen wird, wenn der Beleuchtungsturm (30) ausgeschaltet ist, wenn der Einstellungswahlschalter (4) in automatischen Betrieb eingestellt ist und der Überwachungsbetrieb-Wahlschalter (41) aktiviert ist, und
- ein Schritt des Erzeugens eines Signals oder von Signalen (17), wobei die Erzeugung des Steuersignals oder der -signale (9) auf die Stromversorgungen (10) von LED-Flutlichtstrahlern (11) einwirkt, um den in der Arbeitszone erforderlichen Lichtstärkepegel zu erzielen, das oder die an dem Ausgang oder den Ausgängen (7) anliegende(n) Steuersignal oder -signale (9) in Abhängigkeit von dem erforderlichen Lichtstärkepegel entsprechend der von den Umgebungssensormodulen (2) und/oder den Lichtpegelanzeigemodulen (3) ermittelten Umgebungsbedingungen dynamisch variabel ist oder sind, das oder die von dem Steuersignal-Erzeugungsmodul (14) erhaltene(n) Steuersignal oder -signale (9) für die Stromversorgungen (10) der LED-Flutlichtstrahler (11) für jede Stromversorgung (10) spezifisch ist oder sind, das oder die an dem oder den Ausgängen (7) anliegende(n) Steuersignal oder -signale (9) durch drahtgebundene Verbindung oder drahtlos an jede Stromversorgung (10) des LED-Flutlichtstrahlers (11) durch analoge Kommunikation, PWM-Digitalkommunikation oder digitale Kommunikation mittels standardmäßiger oder proprietärer Protokolle für Beleuchtung oder andere Arten übertragen wird oder werden, wobei die Phasen in einer der folgenden Betriebsarten durchgeführt werden, die durch den Netzwerk-Betriebsartwahlschalter (42) festgelegt werden
- Betriebsart Einzeln oder
- Betriebsart Netzwerk

7. - Transportabler Beleuchtungsturm (30) mit einer Stromversorgung (10) und LED-Flutlichtstrahlern (11), die einzeln aufgestellt sind, wobei der transportable Beleuchtungsturm (30) eine Lichtstärkeregelungsvorrichtung nach einem der Ansprüche 1 bis 5 aufweist.

## Revendications

1. - Système de régulation d'intensité lumineuse configuré pour commander une tour d'éclairage à LED transportable, comprenant un mat, le système comprenant
• un module de commande électronique (1),
• avec une ou plusieurs sorties (7) avec un ou plusieurs signaux de commande (9) pour une alimentation électrique (10) pour chacun des projecteurs à LED (11) de chaque tour d'éclairage à LED (30), et
• avec un ou plusieurs connecteurs d'extension (8),
• les modules suivants qui sont connectés au module de commande (1) :
∘ un ou plusieurs modules de capteurs ambiants (2) présentant un dispositif de courant continu ou d'alimentation sur batterie (20), un module de traitement de signaux (21), un ou plusieurs modules d'indicateurs de niveau d'éclairage (3), un module de positionnement (GPS) (23), un ou plusieurs capteurs de détecteurs de présence (24), de type infrarouge, sonar, à vision par ordinateur ou autre, et un dispositif de communication (25) avec une sortie numérique (26), avec une capacité de communication bidirectionnelle câblée ou sans fil pour communiquer avec le module de commande électronique (1),
∘ un ou plusieurs modules d'indicateurs de niveau d'éclairage (3), comprenant un ou plusieurs capteurs de niveau d'éclairage ambiant (50), un module de traitement de signaux (51) pour faire la moyenne des valeurs mesurées, et un signal de sortie analogique ou numérique (52), dans lequel l'un ou plusieurs modules d'indicateurs de niveau d'éclairage (3) sont construits dans un module de capteur ambiant (2) ou mis en oeuvre sous la forme d'un module séparé,
∘ un sélecteur de niveau d'éclairage de référence (5), destiné à limiter la valeur maximale de l'un ou plusieurs signaux de commande (9) présents au niveau de la ou de plusieurs sorties (7) selon les exigences d'éclairage sélectionnées par l'utilisateur,
∘ un sélecteur de réglage (4) réglable sur un mode manuel ou automatique, dans lequel lorsqu'il est dans la position de mode manuel, le signal de commande (9) au niveau de la sortie ou des sorties (7) est proportionnel à l'amplitude du réglage manuel de référence du sélecteur de niveau d'éclairage de référence (5), et dans lequel lorsqu'il est dans la position de mode automatique, le signal de commande (9) présent au niveau de la sortie ou des sorties (7) est variable de manière dynamique en fonction de l'éclairage ambient capturé par le module ou les modules de capteur ambiant (2) et le niveau d'éclairage souhaité, indiqué dans le module d'indicateur de niveau d'éclairage de référence (3),
∘ un sélecteur de mode de surveillance (41) destiné à sélectionner - lorsqu'il est dans le mode automatique un mode de surveillance, - dans lequel dans le mode de surveillance le module de commande (1) est configuré pour automatiquement démarrer, élever le mât et activer les projecteurs à LED à un niveau d'éclairage de sécurité prédéfini lorsqu'un signal de présence est reçu dans un ou plusieurs des modules de capteurs ambiants (2) lorsque la tour est éteinte,
∘ un sélecteur de mode de fonctionnement en réseau (42) configuré pour être activé lorsqu'il y a plusieurs tours d'éclairage à LED dans la plage définie par les câbles de connexion entre des tours d'éclairage à LED ou par la puissance et la fiabilité d'une liaison sans fil requises pour fonctionner ensemble sur une zone de travail (33) à éclairer.

2. - Système de régulation d'intensité lumineuse pour une tour d'éclairage à LED transportable, selon la revendication 1, **dans lequel** le module de commande électronique (1) comprend
• un module d'alimentation en courant continu (12) qui peut être connecté à l'alimentation électrique (10) de la tour d'éclairage à LED (30) elle-même ou qui peut être connecté à un adaptateur de réseau externe séparé (6), et
• un module de générateur de signal ou signaux de commande (14).

3. - Système de régulation d'intensité lumineuse pour une tour d'éclairage à LED transportable, selon une quelconque des revendications précédentes, **dans lequel** lorsque le sélecteur de mode de fonctionnement en réseau (42) de la première tour est dans un mode en réseau il est configuré pour être un système de régulation maître et les systèmes de régulation des tours suivantes qui présentent le sélecteur de mode de fonctionnement en réseau (42) activé sont des esclaves dans le réseau de communication.

4. - Système de régulation d'intensité lumineuse pour une tour d'éclairage à LED transportable selon une quelconque des revendications précédentes, **dans lequel** le connecteur d'extension (8) est configuré pour connecter le module de commande électronique (1) à un ou plusieurs modules de communication externes (13)

5. - Système de régulation d'intensité lumineuse pour une tour d'éclairage à LED transportable, selon une quelconque des revendications précédentes, **dans lequel** le module de capteur ambiant (2) est configuré pour être installé
• sur la tour d'éclairage à LED (30), exposée individuellement, dans un réseau ou dans des groupes de réseaux,
• à n'importe quel point d'une zone couverte par un faisceau lumineux (34) de la tour d'éclairage à LED (30) ou d'un réseau de tours d'éclairage à LED (30) ; positionné sur la surface de base ou en hauteur, et
• de manière fixée aux machines qui fonctionnent dans une zone éclairée (32) ou fixée aux vêtements du personnel situé dans une zone de travail éclairée (33).

6. - Procédure de régulation d'intensité lumineuse pour le système de régulation d'intensité selon une quelconque des revendications précédentes, dans laquelle le système de régulation peut être positionné dans la tour d'éclairage à LED (30), la procédure comprend les phases suivantes
- une phase de surveillance (15), dans laquelle des conditions environnementales sont surveillées sur la base du module ou des modules de capteur ambiant (2) et des modules d'indicateurs de niveau d'éclairage (3), chaque module de capteur ambiant (2) traitant par le biais d'un module de traitement de signaux (21) des signaux reçus par le module d'indicateur de niveau d'éclairage (3), le module de positionnement GPS (23) et le capteur de détecteur de présence (24), et agissant sur le dispositif de communication (25) de telle sorte que la vitesse et la quantité de données transférées s'ajustent sur les signaux reçus,
- une phase de traitement (16), dans laquelle des informations reçues à partir de la phase de surveillance (15) et à partir d'un réglage d'un sélecteur de niveau d'éclairage de référence (5), de sélecteur de réglage (4), de sélecteur de mode de surveillance (41) et de sélecteur de mode de fonctionnement en réseau (42), sont traitées pour déterminer l'intensité lumineuse à fournir par chaque projecteur à LED (11),
- le sélecteur de niveau d'éclairage de référence (5) limitant la valeur maximale du signal ou des signaux de commande (9) présents au niveau de la sortie ou des sorties (7), selon les exigences d'éclairage sélectionnées par l'utilisateur, en fonction de l'activité réalisée dans la zone couverte par un faisceau lumineux (34) d'une tour d'éclairage à LED (30) ou d'un réseau ou de réseaux de tours d'éclairage à LED (30), lorsque le sélecteur de réglage (4) est dans la position de mode manuel, le signal ou les signaux de commande (9) présents au niveau des sorties (7) étant déterminés par le réglage du sélecteur de niveau d'éclairage de référence (5) sans tenir compte des conditions ambiantes,
- le signal ou les signaux de commande (9) présents au niveau des sorties (7) sont variables de manière dynamique selon les signaux envoyés par le module ou les modules de capteur ambiant (2), les signaux envoyés par les modules d'indicateurs de niveau d'éclairage (3), le réglage des sélecteurs de niveaux d'éclairage de référence (5), le sélecteur de mode de surveillance (41) et le sélecteur de mode de fonctionnement en réseau (42), lorsque le sélecteur de réglage (4) est dans la position automatique,
- le module de commande électronique (1) permet le démarrage, l'élévation de mât et l'activation des projecteurs à LED (11) à un niveau d'éclairage de sécurité prédéfini lorsqu'un signal de présence est reçu dans un ou plusieurs des modules de capteurs ambiants (2), lorsque la tour d'éclairage à LED (30) est éteinte, lorsque le sélecteur de réglage (4) est sélectionné dans le mode automatique et le sélecteur de mode de surveillance (41) est activé, et
- une phase de génération de signal ou de signaux (17), dans laquelle la génération du signal ou des signaux de commande (9) agit sur les alimentations électriques (10) des projecteurs à LED (11) pour atteindre le niveau d'intensité lumineuse requis dans la zone de travail, le signal ou les signaux de commande (9) présents au niveau de la sortie ou des sorties (7) sont variables de manière dynamique en fonction du niveau d'intensité lumineuse requis, en fonction des conditions ambiantes déterminées par les modules de capteurs ambiants (2) et/ou les modules d'indicateurs de niveau d'éclairage (3), le signal ou les signaux de commande (9) pour les alimentations électriques (10) des projecteurs à LED (11), obtenus à partir du module de générateur de signal de commande (14) sont spécifiques à chaque alimentation électrique (10), le signal ou les signaux de commande (9), présents au niveau de la sortie ou des sorties (7) sont transmis par la connexion câblée ou sans fil vers chacune des alimentations électriques (10) du projecteur à LED (11), par une communication analogique, une communication numérique PWM ou une communication numérique au moyen de protocoles standards ou propriétaires pour l'éclairage ou d'autres types,
les phases étant réalisées dans un des modes de fonctionnement suivants définis par le sélecteur de mode de fonctionnement en réseau (42)
- mode de fonctionnement individuel, ou
- mode de fonctionnement en réseau.

7. - Tour d'éclairage à LED transportable (30) présentant une alimentation électrique (10) et des projecteurs à LED (11), comprenant un système de régulation d'intensité lumineuse selon une quelconque des revendications 1 à 5.
